Europäisches Patentamt

European Patent Office

Office européen des brevets

(19)

(11) Numéro de publication: **0 094 895**
**A1**

(12) **DEMANDE DE BREVET EUROPEEN**

(21) Numéro de dépôt: **83420084.2**

(22) Date de dépôt: **17.05.83**

(51) Int. Cl.³: **B 23 D 63/14**

(30) Priorité: **19.05.82 FR 8209084**

(43) Date de publication de la demande:
**23.11.83 Bulletin 83/47**

(84) Etats contractants désignés:
**AT BE CH DE GB IT LI NL SE**

(71) Demandeur: **Société SOFIDEX Société Anonyme**
**10 Grande-rue**
**F-42406 Saint-Chamond Cedex(FR)**

(72) Inventeur: **De Guyenro, André**
**2 place Casimir Petit Jouvet**
**F-28240 La Loupe(FR)**

(74) Mandataire: **Buttet, Roger et al,**
**"Cabinet Charras" 3, Place de l'Hôtel-de-Ville**
**F-42000 Saint-Etienne(FR)**

(54) Dispositif pour l'affûtage des lames circulaires destinées à débroussailler.

(57) Une plaque-support (1) disposée obliquement par rapport à l'axe horizontal porte-meule (M) d'une affûteuse ou d'un touret et munie en superposition, d'un levier de réglage (3) articulé en (2) avec moyen de commande manuelle de pivotement; un levier d'avance (10) placé sur le levier (3) et articulé sur ce dernier en (11) avec un axe-pivot (13) déporté pour l'engagement axial à libre rotation de la lame circulaire (14), quel que soit son diamètre, en vue de l'affûtage de sa denture; un moyen d'accouplement et d'entraînement de la denture de la lame, fixé sur le levier d'avance (10) avec butées réglables (17 et 18) fixées sur la plaque-support (1) ; un moyen limiteur de course en rotation de la lame, fixé sur la plaque-support (1) suivant le pas ou écartement des dents.

FIG.1

FIG.3

EP 0 094 895 A1

- 1 -

## Dispositif pour l'affûtage des lames circulaires destinées à débroussailler.

L'invention concerne un dispositif pour l'affûtage des lames circulaires de débroussailleuses animées d'un mouvement rotatif, en vue d'agir de par leur denture périphérique.

Ces lames circulaires doivent nécessairement être affûtées régulièrement suivant les caractéristiques de leur denture, en vue d'obtenir une coupe rapide et sure.

Il est donc apparu nécessaire de réaliser un dispositif adaptable facilement sur les affûteuses et les tourets existants ou y faisant corps, et d'une réalisation simplifiée pour être diffusé facilement chez tous les utilisateurs de débroussailleuses.

On connaît déjà des dispositifs pour l'affûtage des lames circulaires, (Brevet U.S. A 3.352.180), dans lesquels la lame est montée coaxialement au droit de l'articulation de bras rectilignes, en vue d'obtenir de par l'ouverture des dits bras, en combinaison avec la rotation manuelle de la dite scie, l'affûtage du profil de dépouille de chaque dent.

Ce dispositif ne permet pas d'assurer directement l'affûtage en profondeur de chaque dent, et de plus, n'assure pas un affûtage précis et identique de chacune des dents, par suite de l'absence de moyens d'avance pas à pas et de limiteur de course au droit de chaque dent.

La présente invention a pour but de remédier à ces inconvénients.

L'invention telle qu'elle est caractérisée dans les revendications résout le problème consistant à obtenir un affûtage précis tant en profondeur que suivant le profil de dépouille de chaque dent d'une lame circulaire dentée.

Selon une caractéristique, ce dispositif est établi avec une plaque-support fixée angulairement sur le bâti de l'affûteuse ou du touret, et munie facialement en superposition d'un levier de réglage articulé à son extrémité sur ladite plaque ; un levier placé en superposition et axé sur ledit levier de réglage supportant l'axe déporté porte-lame circulaire dont la denture se présente en regard de la meule ; un moyen pour le déplacement angulaire du levier de réglage par rapport à la meule, en vue de l'affûtage de la profondeur de la dent ; un moyen adapté sur le levier porte-lame pour l'entraînement en rotation de la lame tournant sur l'axe déporté entre deux butées de positionnement ; un moyen limiteur de course de la rotation de la lame suivant le pas ou écartement des dents.

Suivant une autre caractéristique, le pivotement du levier de réglage combiné avec le pivotement du levier porte-lame autour de leur axe respectif, permet d'obtenir le réglage circulaire de l'axe de la lame par rapport au profil de la meule, en vue d'obtenir lors de la rotation de ladite lame, la concentricité du profil de la courbe de dégagement entre chaque dent, pour la tangenter par rapport à la meule, en vue de son affûtage.

Pour fixer l'objet de l'invention, sans toutefois le limiter dans les dessins annexés :

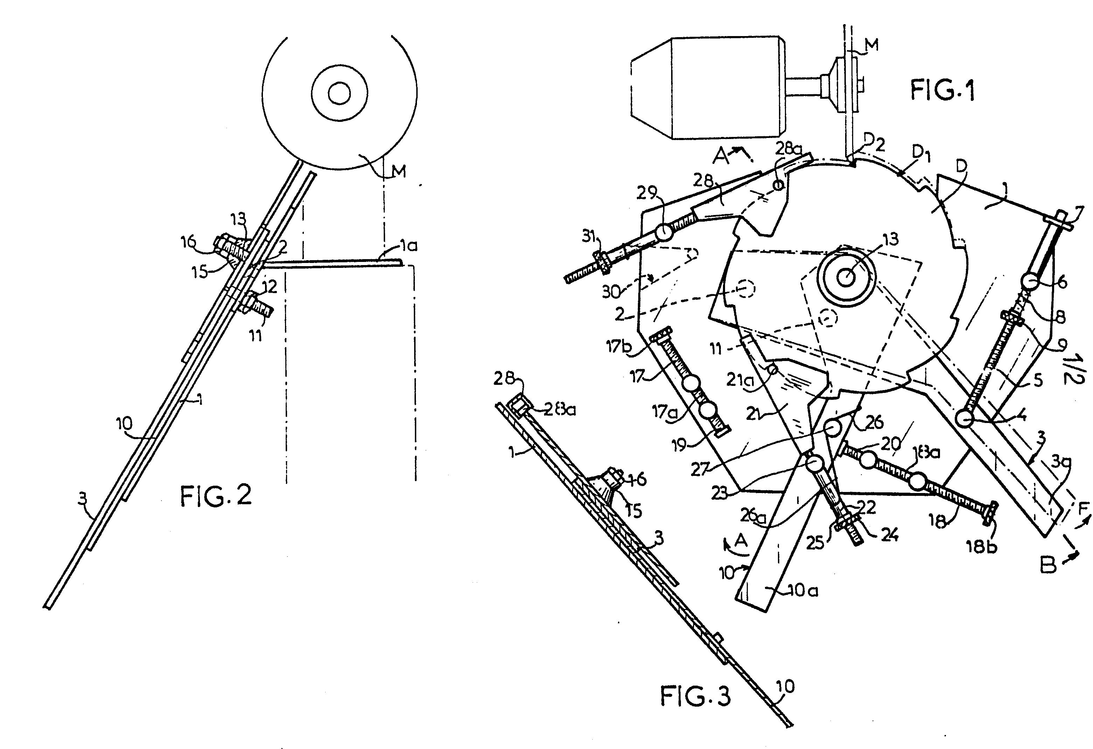

La figure 1 représente à petite échelle, une vue de face du dispositif, le tracé en traits mixtes illustrant le déplacement du levier de réglage, en vue de l'affûtage en profondeur de chaque dent.

La figure 2 représente une vue de profil correspondant à la figure 1.

La figure 3 représente une vue en plan et en coupe suivant l'axe A-B de la figure 1.

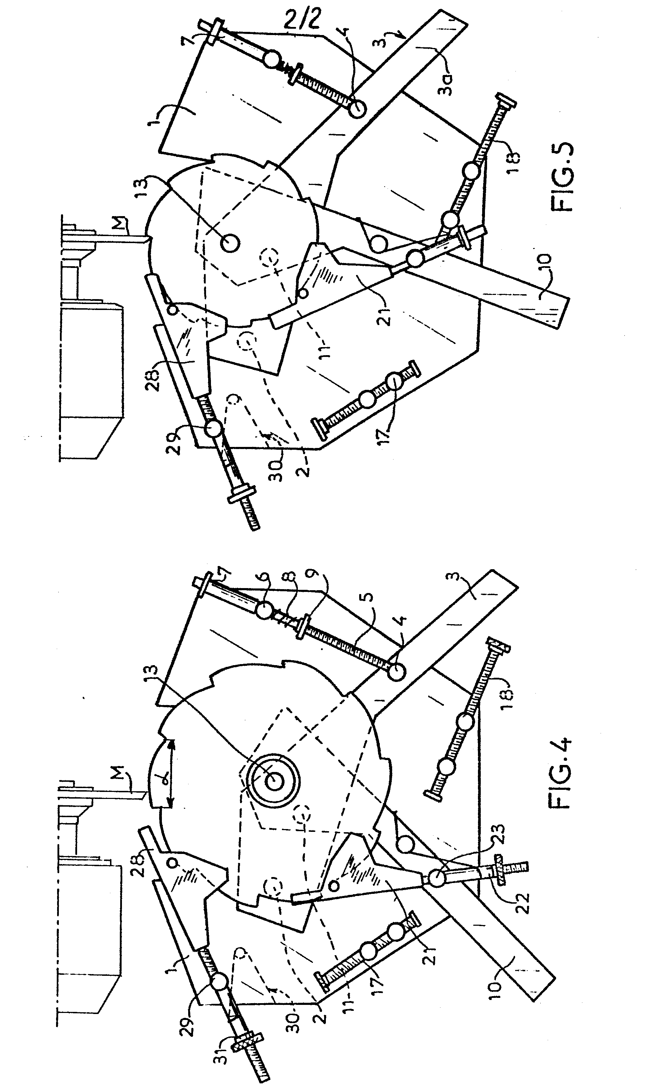

La figure 4 représente une vue semblable à la figure 1, mais lors de l'entraînement en rotation de la lame circulaire, de par le levier d'avance, en vue de l'affûtage de la courbe de dégagement comprise entre chaque dent.

La figure 5 représente une vue en plan du dispositif, dans le cas d'une lame de petit diamètre.

Selon la présente invention, ce dispositif pour l'affûtage des lames circulaires destinées à débroussailler, est établi essentiellement avec une plaque-support 1 muni d'une patte supérieure recourbée $1^1$ en vue de sa fixation oblique et transversale par rapport à l'axe de la meule M d'une affûteuse ou d'un touret classique. Cette plaque-support 1 peut directement être formée par le bâti, dans le cas d'une affûteuse réservée à cet effet.

La plaque-support 1 formant plan incliné autorise l'appui et l'articulation autour d'un axe 2 d'un levier de réglage 3 formant bras de préhension, débordant 3a, pour se déplacer circulairement suivant flèche F.
Ce levier 3 est en outre solidaire d'un doigt extérieur pivotant 4 fixé en bout d'une tige filetée 5 traversant librement à coulissement, un guide 6 fixé pivotant sur la plaque-support 1.

Un écrou de manoeuvre 7 vissé en bout de la tige 5 et prenant appui sur une entretoise, permet de par son vissage manuel, le pivotement progressif vers le haut du levier 3, suivant flèche F, par rapport à la meule M, de manière à permettre l'affûtage de la face rectiligne diamétrale de chaque dent.

Ce déplacement suivant flèche F s'effectue en outre, en comprimant un ressort à boudin 8 centré sur la tige 5 et intercalé entre le guide 6 et un écrou-butée 9, à seule fin d'assurer le rappel du levier 3 vers le bas, lors du dévissage de l'écrou de manoeuvre 7.

Un levier d'avance 10 placé en superposition sur le levier 3, s'articule de par son doigt 11, dans un trou percé dans l'épaisseur de ce dernier, suivant flèche A, tandis qu'un système écrou et contre-écrou 12 assure son maintien. Suivant sa face extérieure opposée, le levier d'avance 10 est solidaire d'un axe-pivot 13 judicieusement disposé vers le haut en formant une triangulation avec les autres axes 2 et 11. Cet axe-pivot 13 autorise le centrage à libre rotation, de la lame circulaire 14 devant être affûtée par la meule M. A cet effet, une douille 15 cylindro-conique, maintenue par un écrou 16 vissé sur l'axe-pivot 13, permet l'engagement et le centrage de tous les diamètres de l'ouverture axiale de la lame. Le levier d'avance 10 forme bras de préhension 10a qui se déplace circulairement suivant flèche A, entre deux butées réglables 17 et 18 formées respectivement par une tige filetée 17a - 18a munie en bout d'un bouton de préhension 17b, 18b et vissée dans deux supports 19, 20 solidaires de la plaque-support 1. Ces butées 17 et 18 sont fixées en position et disposées angulairement pour autoriser une amplitude maximum de pivotement du levier d'avance 10.

Il faut considérer que l'entraînement en rotation de la lame circulaire 14 par le levier d'avance 10, est obtenu par un butoir 21 de section en forme de U, pour chevaucher en partie ladite lame qui occupe une position surélevée par rapport audit levier 10. Les flasques de ce butoir 21 sont en outre reliés par un ergot 21a qui s'engage sur le profil de la denture et bute contre la face diamétrale d'une dent. Le butoir 21 est rendu solidaire à son extrémité opposée d'une tige filetée 22 qui traverse un doigt pivotant 23 fixé extérieurement sur le levier d'avance et reçoit en bout un bouton de manoeuvre 24 coopérant en appui sur ledit doigt 23 par l'intermédiaire d'une bague entretoise 25. Ce bouton 24 permet le réglage longitudinal du butoir 21 et par suite de son ergot 21a, par rapport à la dent en prise pour obtenir une rotation partielle de la lame circulaire 14 en vue du positionnement précis du sommet de la dent devant être affûtée avec la meule M.

Un ressort en épingle 26 centré et fixé de part ses spires sur un axe 27 solidaire du levier d'avance 10, agit en pression de par sa branche mobile 26a, sur la bague-entretoise 25, en vue d'assurer le contact permanent du doigt 21a sur la denture de la lame 14.

Un butoir de retenue 28, semblable au butoir 21, est fixé de par son doigt pivotant 29, à la partie supérieure de la plaque support 1 pour présenter un ergot 28a en position d'enclenchement par rapport à la face diamétrale de la dent disposée en amont par rapport à la meule M, tandis qu'un ressort en épingle 30 assure le contact à la façon d'un encliquetage. Ce butoir 28 est également réglable longitudinalement de par un bouton de manoeuvre 31, suivant l'écartement $\alpha$ compris entre deux dents consécutives, pour permettre, lors du pivotement du levier d'avance 10, la rotation dent par dent de la lame circulaire 14 par rapport à la meule M.

Selon ces dispositions, la lame circulaire 14, engagée sur l'axe-pivot 13, est positionnée de par sa dent supérieure D contre la meule M, tandis que par l'intermédiaire de l'axe 2 et du doigt 11, les leviers 3 et 10 oscillant respectivement suivant les flèches A et F, permettent d'obtenir le positionnement variable de l'axe-pivot 13, et par suite de ladite lame 14 par rapport à ladite meule M.

Le déplacement angulaire du levier d'avance 10 autour du doigt 11, suivant flèche A, et entre les deux butées 17 et 18, en combinaison avec l'entraînement en rotation de la lame 14 autour de la douille 15, permet à la meule M de tangenter le profil de la courbe de dégagement D1 comprise entre deux dents consécutives D, à seule fin d'en assurer l'affûtage.

Il faut noter que ce déplacement est limité par le butoir de retenue 28 qui agit en encliquetage suivant chaque dent

- 6 -

0094895

consécutive.

La profondeur D2 du dégagement D1 est affûtée au moyen du levier de réglage 3 qui oscille autour de l'axe 2, suivant flèche F, en entraînant ainsi en hauteur, la lame 14 et le levier 10.

Il est bien évident que ces affûtages s'effectuent pour permettre d'obtenir un angle de coupe transversal déterminé par l'inclinaison de la plaque-support 1 par rapport à la meule M.

Ces dispositions s'appliquent à des lames 14 de diamètres différents, par suite de la possibilité de variation non limitée de positionnement de son axe-support par rapport à la meule, au moyen des pivotements combinés des leviers 3 et 10, figure 5.

Revendications.

1. Dispositif pour l'affûtage des lames circulaires destinées à débroussailler, caractérisé en ce qu'il comprend une plaque support (1) disposée obliquement par rapport à l'axe horizontal porte-meule (M) d'une affûteuse ou d'un touret, et munie en superposition, d'un levier de réglage (3) articulé en (2) avec moyen de commande manuelle de pivotement ; un levier d'avance (10) placé sur le levier (3) et articulé sur ce dernier en (11) avec un axe-pivot (13) déporté pour l'engagement axial à libre rotation de la lame circulaire (14) quel que soit son diamètre, en vue de l'affûtage de sa denture ; un moyen d'accouplement et d'entraînement de la denture de la lame fixé sur le levier d'avance (10) avec butées réglables (17 et 18) fixées sur la plaque-support (1) ; un moyen limiteur de course en rotation de la lame, fixé sur la plaque-support (1) suivant le pas ou écartement des dents.

2. Dispositif selon la revendication 1, caractérisé en ce que l'axe (2) d'articulation du levier de réglage (3), l'axe (11) d'articulation du levier d'avance (10) et l'axe pivot (13) porte-lame (14) constituent une triangulation déformable en vue d'obtenir de par l'oscillation du levier d'avance (10) entre les butées (17 et 18), la rotation partielle de cette lame suivant le profil excentré de la courbe de dégagement (D1) entre chaque dent, par rapport à la meule, en vue de son affûtage.

3. Dispositif selon la revendication 1, caractérisé en ce que le moyen de déplacement angulaire du levier de réglage (3) autour de l'axe (2), en vue de l'affûtage en profondeur (D2) de chaque dent (D), par rapport à la meule (M), est assuré par une tige filetée (5) articulée sur ledit levier (3) et traversant un guide (6) pivotant, fixé sur la plaque support (1) ; un écrou de manoeuvre (7) vissé en bout de la tige (5) et prenant appui sur le guide (6), autorisant le déplacement progressif sur le levier (3) à l'encontre d'un ressort à boudin (8) disposé à l'opposé dudit guide (6) et maintenu par un écrou-butée (9).

4. Dispositif selon la revendication 1, caractérisé en ce que le moyen d'accouplement et d'entraînement de la lame (14) par le levier d'avance (10), comprend un butoir (21) muni d'un ergot (21a) qui s'engage sur le profil d'entraînement de la denture et d'une tige montée coulissante dans un doigt (23) pivotant sur ledit levier (10) ; un bouton de manoeuvre (24) assurant le réglage longitudinal dudit butoir (21), en vue de présenter la face diamétrale (D2) de la dent à affûter, en regard de la meule (M) ; un ressort en épingle (26) fixé sur un axe (27) pour autoriser de par sa branche (26a), l'appui sur le butoir (21) en vue du contact de l'ergot (21a) sur la denture.

5. Dispositif selon la revendication 1, caractérisé en ce que les butées réglables (17 et 18) du levier d'avance (10) sont formées respectivement par une tige filetée (17a -18a) vissée dans des supports (19 - 20) fixés sur la plaque (1), et munie en bout d'un bouton de préhension (17b - 18b) ; lesdites butées permettant d'obtenir le réglage de l'amplitude d'oscillation du levier (10).

6. Dispositif selon la revendication 1, caractérisé en ce que le moyen limiteur de course en rotation de la lame (14) suivant l'écartement de chaque dent, comprend un butoir de retenue (28) avec ergot (28a) s'engageant sur le talon de la dent disposée en amont par rapport à la meule (M) ; le dit butoir (28) coopérant de par sa tige filetée engagée dans un doigt pivotant (29) fixé sur la plaque-support, avec un bouton de manoeuvre (31),pour permettre son réglage en position par la rotation de la lame (14), dent par dent.

0094895

FIG.1

FIG.2

FIG.3

FIG. 4

FIG. 5

0094895

# 0094895

Office européen
des brevets

**RAPPORT DE RECHERCHE EUROPEENNE**

Numéro de la demande

EP  83 42 0084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,D | US-A-3 352 180  (RASMUSSEN)<br>* Colonne 2, lignes 20-52; figures * | 1 | B 23 D  63/14 |
| A | CH-A- 293 503  (MOLLARD)<br>--- | 1 | |
| A | FR-E- 93 287  (MACHACEK)<br>--- | 1 | |
| A | US-A-2 742 799  (OLLER)<br>--- | 1 | |
| A | US-A-4 102 224  (WRIGHT)<br>--- | 1 | |
| A | FR-A- 558 176  (DUCHARNE)<br>----- | 1 | |

**DOMAINES TECHNIQUES RECHERCHES (Int. Cl. ³)**

B 23 D  63/00

Le présent rapport de recherche a été établi pour toutes les revendications

| Lieu de la recherche | Date d'achèvement de la recherche | Examinateur |
|---|---|---|
| LA HAYE | 02-08-1983 | HORVATH R.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82